# EUROPÄISCHE PATENTSCHRIFT

(11) **EP 2 523 988 B1**
(45) Veröffentlichungstag und Bekanntmachung des Hinweises auf die Patenterteilung: **02.05.2018**
(21) Anmeldenummer: 11700045.5
(22) Anmeldetag: 07.01.2011
(51) Int. Cl.: C08G 18/10, C08G 18/30, C08G 18/72, C08G 18/79, C08G 18/80, C08J 9/02, A61L 15/26

(54) **HYDROPHILE, ALIPHATISCHE POLYURETHAN-SCHÄUME**
HYDROPHILIC ALIPHATIC POLYURETHANE FOAMS
MOUSSE DE POLYURÉTHANE HYDROPHILE ET ALIPHATIQUE

(30) Priorität: 11.01.2010 EP 10000158
(43) Veröffentlichungstag der Anmeldung: 21.11.2012
(73) Patentinhaber: Covestro Deutschland AG, 51373 Leverkusen (DE)
(72) Erfinder: NIESTEN, Meike, 51061 Köln (DE); DÖRR, Sebastian, 40593 Düsseldorf (DE)
(74) Vertreter: Levpat
(86) Internationale Anmeldenummer: PCT/EP2011/050168
(87) Internationale Veröffentlichungsnummer: WO 2011/083144

(56) Entgegenhaltungen:
- EP-A1- 0 299 122
- EP-A1- 2 028 223
- WO-A2-95/30045

## Beschreibung

Die Erfindung betrifft hydrophile, aliphatische Polyurethan-Schäume, die durch Reaktion von hydrophilen Polyisocyanaten in Gegenwart von Wasser zugänglich sind. Aufgrund ihrer Absorptionseigenschaften sind die Polyurethan-Schäume insbesondere zur Herstellung von Wundauflagen, kosmetischen Artikeln oder Inkontinenzprodukten geeignet.

Die EP-A 949 285 beschreibt die Reaktion von Polyisocyanaten mit primären Diaminen, niedermolekularen Polyolen und hochmolekularen Polyolen. Bei dieser Reaktion ist nicht auszuschließen, dass erhebliche Teile der isocyanatreaktiven Substanzen nicht umgesetzt werden und anschließend aus dem hydrophilen Schaum extrahierbar sind.

Die GB 1 571 730 beschreibt die Reaktion von Diisocyanaten mit hohem Dampfdruck wie Isophorondiisocyanat (IPDI) und Bis(isocyanatocyclohexyl)methan (HMDI) mit Polyolen. Auch hier bleiben nicht umgesetzte Komponenten zurück. Ferner ist das Arbeiten mit freien, nicht derivatisierten Diisocyanaten aus Sicht der Arbeitshygiene problematisch. In der WO 2004013215 werden ebenfalls leicht flüchtige Diisocyanate umgesetzt.

Die WO2003/097727, US 5,065,752 und US 5,064,653 beschreiben Schaumbildungsreaktion von Präpolymeren in Gegenwart von Acrylamid-Acrylsäure-Copolymeren. Diese Produkte sind chemisch nicht angekoppelt und können komplett extrahiert werden, was nicht wünschenswert ist.

In der US 3,903,232 und US 3,88,941 werden Präpolymere mit Polyethern umgesetzt. Auch hier besteht die Gefahr des Auftretens nicht angekoppelter Polyole. Die US 5,296,518 beschreibt ebenso die Umsetzung von Präpolymeren mit Polyethern, wobei drei unterschiedliche Polyole eingesetzt werden, was die Wirtschaftlichkeit dieses Verfahrens in Frage stellt. Zudem lässt sich mit dem dort beschriebenen Verfahren nicht sicherstellen, dass keine niedermolekularen Isocyanate im Gemisch verbleiben, was nachteilig ist. Die Herstellung der Präpolymere erfordert außerdem zumeist unwirtschaftlich lange Reaktionszeiten.

Die noch unveröffentlichte europäische Patentanmeldung mit der Anmeldenummer EP 08012372.2 beschreibt hydrophile aliphatische Polyurethanschäume basierend auf monomerarmen Präpolymeren. Die Hydrophile der resultierenden Schäume ist jedoch begrenzt. Aus der EP 08012372.2 sind keine Polyurethanschäume bekannt, die zusätzliche hydrophile Polyisocyanate enthalten.

In der noch unveröffentlichten europäischen Patentanmeldung mit der Anmeldenummer EP 09011102.2 ist ein Verfahren zur Herstellung von hydrophilen aliphatischen Polyurethan-Schäumen aus isocyanatfunktionellen Präpolymeren, hydrophilen Polyisocyanaten und Wasser beschrieben. Bei den bekannten Polyurethanschäumen ist entweder das Aufnahmevermögen für hydrophile Flüssigkeiten nicht ausreichend oder sie enthalten extrahierbare Substanzen, die mit Hinblick auf ihre Zellverträglichkeit als problematisch einzustufen sind.

Aufgabe der vorliegenden Erfindung war es daher ein Verfahrens zur Herstellung von Polyurethan-Schäumen bereit zu stellen, die nur wenig extrahierbare Bestandteile aufweisen, zellverträglich sind, eine große Menge hydrophiler Flüssigkeiten wie physiologische Salzlösung oder Wundflüssigkeit schnell aufnehmen können und derart verformbar sind, dass sie sich beispielsweise der Form einer Wunde optimal anpassen können.

Diese Aufgabe wird erfindungsgemäß durch ein Verfahren zur Herstellung hydrophiler, aliphatischer Polyurethan-Schäume gelöst, bei dem Zusammensetzungen umfassend
A) hydrophile Polyisocyanate erhältlich durch Umsetzung von
   A1) niedermolekularen, aliphatischen Diisocyanaten einer Molmasse von 140 bis 278 g/mol und / oder daraus herstellbaren Polyisocyanaten mit einer Isocyanatfunktionalität von 2 bis 6 mit
   A2) monofunktionellen Polyalkylenoxiden einer OH-Zahl von 10 bis 250, und einem Ethylenoxidanteil von 50 bis 100 mol% bezogen auf die Gesamtmenge der enthaltenen Oxyalkylengruppen,
B) heterocyclische, 4-Ring- oder 6-Ring-Oligomere von niedermolekularen, aliphatischen Diisocyanaten mit einer Molmasse von 140 bis 278 g/mol,
C) Wasser,
D) gegebenenfalls Katalysatoren,
E) gegebenenfalls C₈- bis C₂₂-Monocarbonsäuren oder deren Ammonium- oder Alkalisalze oder C₁₂- bis C₄₄-Dicarbonsäuren oder deren Ammonium- oder Alkalisalze,
F) gegebenenfalls Tenside,
G) gegebenenfalls ein- oder mehrwertige Alkohole und
H) kein isocyanatfunktionelles Präpolymer mit einem Gewichtsanteil an niedermolekularen, aliphatischen Diisocyanaten mit einer Molmasse von 140 bis 278 g/mol von unter 1,0 Gew.-% bezogen auf das Präpolymer, erhältlich durch Umsetzung von

H1) niedermolekularen, aliphatischen Diisocyanaten einer Molmasse von 140 bis 278 g/mol mit
H2) di- bis hexafunktionellen Polyalkylenoxiden einer OH-Zahl von 22,5 bis 112 mg KOH/g, und einem Ethylenoxidanteil von 50 bis 100 mol% bezogen auf die Gesamtmenge der enthaltenen Oxyalkylengruppen,
bereitgestellt, aufgeschäumt und ausgehärtet werden.

So wurde überraschenderweise gefunden, dass hydrophile, flexible Schäume unter Verwendung von Mischungen aus hydrophilen und nicht-hydrophilen Polyisocyanaten durch Umsetzung dieser Mischung mit Wasser hergestellt werden können. Es hat sich gezeigt, dass ohne hydrophiles Polyisocyanat kein Schaum sondern ein transparenter Film erhalten wird und dass ohne nicht-hydrophiles Polyisocyanat wiederum ein spröder Schaum ohne Zusammenhalt entsteht, der sofort zerbröselt. Folglich wird nur bei dem erfindungsgemäßen Einsatz einer Kombination von hydrophilen und nicht-hydrophilen Polyisocyanaten ein Schaum mit den gewünschten Eigenschaften erhalten.

Im Gegensatz zu der nicht vorveröffentlichten Anmeldung EP 09011102.2 wird bei dem erfindungsgemäßen Verfahren eine Zusammensetzung verwendet, die kein isocyanatfunktionelles Präpolymer H) umfasst

Bevorzugt werden hydrophile Polyisocyanat A) mit einem NCO-Gehalt von 0,3 bis 20 Gew.-%, bevorzugt von 2 bis 10 Gew.-% und besonders bevorzugt von 3 bis 6 Gew.-% eingesetzt.

Bei der Herstellung der hydrophilen Polyisocyanate A) wird das Verhältnis der monofunktionellen Polyalkylenoxide A2) zu den niedermolekularen, aliphatischen Diisocyanaten A1) typischerweise so eingestellt, dass auf 1 Mol OH-Gruppen der monofunktionellen Polyalkylenoxide 1,25 bis 15 Mol, bevorzugt mit 2 bis 10 Mol und besonders bevorzugt 2 bis 6 Mol NCO-Gruppen des niedermolekularen, aliphatischen Diisocyanats A1) kommen. Anschließend erfolgt die Allophanatisierung bzw. Biurethisierung und/oder Isocyanuratbildung bzw. Uretdionbildung. Werden die Polyalkylenoxide A2) über Urethangruppen an die aliphatischen Diisocyanate A1) gebunden, findet bevorzugt im Anschluss eine Allophanatisierung statt. Weiterhin ist bevorzugt, dass Isocyanurat-Struktureinheiten gebildet werden.

Eine alternative Herstellung der hydrophilen Polyisocyanate A) erfolgt typischerweise durch Umsetzung von 1 Mol OH-Gruppen der der monofunktioneller Polyalkylenoxidkomponente A2) mit 1,25 bis 15 Mol, bevorzugt mit 2 bis 10 Mol und besonders bevorzugt 2 bis 6 Mol NCO-Gruppen eines Polyisocyanates A1) mit einer Isocyanatfunktionalität von 2 bis 6, basierend auf aliphatischen Disocyanaten. Beispielhaft für derartige Polyisocyanate A1) sind Biuret-Strukturen, Isocyanurate bzw. Uretdione basierend auf aliphatischen Diisocyanaten. Dabei werden das Polyisocyanat A1) und das Polyalkylenoxid A2) bevorzugt über eine Urethangruppe bzw. eine Harnstoffgruppe miteinander verknüpft, wobei besonders die Verknüpfung über Urethangruppen bevorzugt ist.

Die Umsetzung kann in Gegenwart von Urethanisierungskatalysatoren wie Zinnverbindungen, Zinkverbindungen, Aminen, Guanidinen oder Amidinen, oder in Gegenwart von Allophanatisierungskatalysatoren wie Zinkverbindungen erfolgen.

Die Umsetzung erfolgt typischerweise bei 25 bis 140 °C, bevorzugt 60 bis 100 °C.

Wurde mit überschüssigem niedermolekularen Diisocyanat gearbeitet, erfolgt anschließend die Entfernung des Überschusses an niedermolekularem, aliphatischen Diisocyanat bevorzugt durch Dünnschichtdestillation.

Vor, während und nach der Reaktion oder der destillativen Abtrennung des Diisocyanatüberschusses können saure oder alkylierende Stabilisatoren, wie Benzoylchlorid, Isophthaloylchlorid, Methyltosylat, Chlorpropionsäure, HCl oder Antioxidantien, wie Di-*tert*-butylkresol oder Tocopherol zugesetzt werden.

Beispiele für niedermolekulare, aliphatische Diisocyanate der Komponente A1) sind Hexamethylendiisocyanat (HDI), Isophorondiisocyanat (IPDI), Butylendiisocyanat (BDI), Bisisocyanatocyclohexylmethan (HMDI), 2,2,4-Trimethylhexamethylendiisocyanat, Bisisocyanatomethylcyclohexan, Bisisocyanatomethyltricyclodecan, Xylendiisocyanat, Tetramethylxylylendiisocyanat, Norbornandiisocyanat, Cyclohexandiisocyanat oder Diisocyanatododecan, wobei Hexamethylendiisocyanat (HDI), Isophorondiisocyanat (IPDI), Butylendiisocyanat (BDI) und Bis(isocyanatocyclohexyl)methan (HMDI) bevorzugt sind. Besonders bevorzugt sind Butylendiisocyanat (BDI), Hexamethylendiisocyanat (HDI), Isophorondiisocyanat (IPDI) ganz besonders bevorzugt Hexamethylendiisocyanat und Isophorondiisocyanat oder deren Mischungen.

Beispiele für höhermolekulare Polyisocyanate A1) sind Polyisocyanate mit einer Isocyanatfunktionalität von 2 bis 6 mit Isocyanurat-, Urethan-, Allophanat-, Biuret-, Iminooxadiazintrion-, Oxadiazintrion- und/oder Uretdiongruppen auf Basis der im vorstehenden Abschnitt genannten aliphatischen und/oder cycloaliphatischen Diisocyanate.

Bevorzugt werden als Komponente A1) höhermolekulare Verbindungen mit Biuret-, Iminooxadiazin-dion,- Isocyanurat- und/oder Uretdiongruppen auf Basis von Hexamethylendiisocyanat, Isophorondiisocyanat und/oder 4,4'-Diisocyanatodicyclohexylmethan eingesetzt. Weiter bevorzugt sind Isocyanurate. Ganz besonders bevorzugt sind Strukturen auf Basis von Hexamethylendiisocyanat.

Die monofunktionellen Polyalkylenoxiden A2) können insbesondere eine OH-Zahl von 15 bis 150, bevorzugt von 28 bis 112 aufweisen.

Die monofunktionellen Polyalkylenoxiden A2) können insbesondere einem Ethylenoxidanteil von 50 bis 100 mol%, bevorzugt von 60 bis 100 mol%, bezogen auf die Gesamtmenge der enthaltenen Oxyalkylengruppen aufweisen.

Unter monofunktionellen Polyalkylenoxiden im Sinne der Erfindung sind Verbindungen zu verstehen, die nur eine Isocyanat-reaktive Gruppe, d.h. eine Gruppe, die mit einer NCO-Gruppe reagieren kann, aufweisen.

Die Herstellung von Polyalkylenoxiden A2) durch Alkoxylierung geeigneter Startermoleküle ist literaturbekannt (z.B. Ullmanns Encyclopädie der technischen Chemie, 4. Auflage, Band 19, Verlag Chemie, Weinheim S. 31-38). Geeignete Startermoleküle sind insbesondere gesättigte Monoalkohole wie Methanol, Ethanol, n-Propanol, Isopropanol, n-Butanol, Isobutanol, sec-Butanol, Diethylenglykolmonobutylether sowie aromatische Alkohole wie Phenol oder Monoamine wie Diethylamin. Bevorzugte Startermoleküle sind gesättigte Monoalkohole der vorstehend genannten Art. Besonders bevorzugt werden Diethylenglykolmonobutylether oder n-Butanol als Startermoleküle verwendet.

Die monofunktionellen Polyalkylenoxide A2) besitzen typischerweise zahlenmittlere Molekulargewichte von 220 bis 3700 g/mol, bevorzugt von 500 bis 2800 g/mol.

Die monofunktionellen Polyalkylenoxide A2) besitzen bevorzugt eine OH-Gruppe als Isocyanat-reaktive Gruppe.

Geeignete 4-Ring- oder 6-Ring-Oligomere B) sind heterocyclische sind beispielsweise Isocyanurate, Iminooxadiazindione oder Uretdione der vorgenannten niedermolekularen, aliphatischen Diisocyanate. Bevorzugt sind heterocyclische 4-Ring-Oligomere wie Uretdione.

Vorzugsweise wird als Komponente B) heterocyclische 4-Ring-Oligomere eingesetzt.

Der durch den Einsatz der Komponente B) erhöhte Gehalt an Isocyanatgruppen sorgt für ein besseres Aufschäumen, da bei der Isocyanat-Wasser-Reaktion mehr CO₂ gebildet wird.

Das als Komponente C) einzusetzende Wasser kann als solches, als Kristallwasser eines Salzes, als Lösung in einem dipolar-aprotischen Lösungsmittel oder auch als Emulsion eingesetzt werden. Bevorzugt wird das Wasser als solches eingesetzt.

Zur Beschleunigung der Urethanbildung können in Komponente D) Katalysatoren eingesetzt werden. Dabei handelt es sich typischerweise um die dem Fachmann aus der Polyurethantechnologie bekannten Verbindungen. Bevorzugt sind hier Verbindungen der Gruppe bestehend aus katalytisch aktiven Metallsalzen, Aminen, Amidinen und Guanidinen. Beispielhaft zu nennen sind Zinndibutyldilaurat (DBTL), Zinnacetat, 1,8-Diazabi-cyclo[5.4.0]undecen-7 (DBU), 1,5-Diazabicyclo-[4.3.0]nonen-5 (DBN), 1,4-Diazabicy-clo[3.3.0]octen-4 (DBO), N-Ethylmorpholin (NEM), Triethylendiamin (DABCO), Pentamethylguanidin (PMG), Tetrametylguanidin (TMG), Cyclotetramethylguanidin (TMGC), n-Decyl-tetramethylguanidin (TMGD), n-Dodecyltetramethylguanidin (TMGDO), Dimethylaminoethyltetramethylguanidin (TMGN), 1,1,4,4,5,5-Hexamethylisobiguanidin (HMIB), Phenyltetramethylguanidin (TMGP) und Hexamethylenoctamethylbiguanidin (HOBG).

Bevorzugt ist, falls Katalysatoren eingesetzt werden sollen, der Einsatz von Metallsalzen, Aminen, Amidinen, Guanidinen oder deren Mischungen. Bevorzugt ist, falls Katalysatoren eingesetzt werden, auch die Verwendung von 1,8-Diazabi-cyclo[5.4.0]undecen-7 (DBU).

In einer besonders bevorzugten Ausführungsform der Erfindung wird ganz auf Katalysatoren verzichtet.

Gegebenenfalls können als Komponente E) Ammonium- und Alkalisalze von C₈- bis C₂₂-Monocarboxylaten oder deren freien Carbonsäuren oder C₁₂- bis C₄₄-Dicarboxylaten oder deren freien Dicarbonsäuren, bevorzugt Kalium- oder Natriumsalze von C₈- bis C₂₂-Monocarboxylaten oder C₁₂- bis C₄₄-Dicarboxylaten und besonders bevorzugt Natriumsalze von C₈- bis C₂₂-Mono-carboxylaten eingesetzt werden. Besonders bevorzugt werden als Komponente E) Kalium- oder Natriumsalze von C₈- bis C₂₂-Monocarboxylaten oder C₁₂- bis C₄₄-Dicarboxylaten, bevorzugt Natriumsalze von C₈- bis C₂₂-Monocarboxylaten eingesetzt.

Beispiele geeigneter Verbindungen der Komponente E) sind die Ammonium-, Na-, Li- oder K-Salze von Ethylhexansäure, Octansäure, Decansäure, Dodecansäure, Palmitinsäure, Stearinsäure, den Octadecensäuren, den Octadecadiensäuren, den Octadecatriensäuren, Isostearinsäure, Erucasäure, Abietinsäure und ihren Hydrierungsprodukten. Beispiele für C₁₂- bis C₄₄-Dicarbonsäuren bzw. die daraus abgeleiteten Ammonium- und Alkalisalze sind Dodecandisäure, Dodecenyl-, Tetradecenyl-, Hexadecenyl- und Octadecenyl-Bernsteinsäure, C₃₆- und C₄₄-Dimerfettsäuren und ihre Hydrierungsprodukte sowie die entsprechenden Ammonium-, Na-, Li- oder K-Salze dieser Dicarbonsäuren.

Zur Verbesserung der Schaumbildung, Schaumstabilität oder der Eigenschaften des resultierenden Polyurethan-Schaums können Verbindungen der Komponente F) eingesetzt werden, wobei solche Additive grundsätzlich alle an sich bekannten anionischen, kationischen, amphoteren und nichtionischen Tenside sowie Mischungen hieraus sein können. Bevorzugt werden Alkylpolyglycoside, EO/PO-Blockcopolymere, Alkyl- oder Arylalkoxylate, Siloxanalkoxylate, Ester der Sulfobernsteinsäure und/oder Alkali- oder Erdalkalimetallalkanoate eingesetzt. Besonders bevorzugt werden EO/PO-Blockcopolymere eingesetzt. Bevorzugt werden allein die EO/PO-Blockcopolymere als Komponente F) eingesetzt.

Zudem können zur Verbesserung der Schaumeigenschaften des resultierenden Polyurethan-Schaums Verbindungen der Komponente G) verwendet werden. Hierbei handelt es sich um grundsätzlich alle dem Fachmann an sich bekannten ein- und mehrwertigen Alkohole sowie Mischungen hieraus. Dies sind ein- oder mehrwertige Alkohole oder Polyole, wie Ethanol, Propanol, Butanol, Decanol, Tridecanol, Hexadecanol, Ethylenglykol, Neopentylglykol, Butandiol, Hexandiol, Decandiol, Trimethylolpropan, Glycerin, Pentaerythrit, monofunktionelle Polyetheralkohole und Polyesteralkohole, Polyetherdiole und Polyesterdiole.

Typischerweise werden die Komponenten A) bis G) in folgenden Mengen eingesetzt:
45 bis 80 Gewichtsteile hydrophile Polyisocyanate A)
5 bis 50 Gewichtsteile heterocyclischer Oligomere B)
1 bis 50 Gewichtsteile Wasser C)
0 bis 1 Gewichtteile Katalysatoren D)
0 bis 5 Gewichtteile C₈- bis C₁₂-Monocarbonsäuren oder deren Ammonium- oder Alkalisalze oder C₁₂- bis C₄₄-Dicarbonsäuren oder deren Ammonium- oder Alkalisalze E)
0 bis 10 Gewichtsteile Tenside F)
0 bis 20 Gewichtsteile Alkohole G)

Bevorzugt werden die Komponenten A) bis G) in folgenden Mengen eingesetzt:
45 bis 80 Gewichtsteile hydrophile Polyisocyanate A)
5 bis 50 Gewichtsteile heterocyclischer Oligomere B)
5 bis 20 Gewichtsteile Wasser C)
0 bis 1 Gewichtteile Katalysatoren D)
0,01 bis 5 Gewichtteile C₈- bis C₁₂-Monocarbonsäuren oder deren Ammonium- oder Alkalisalze oder C₁₂- bis C₄₄-Dicarbonsäuren oder deren Ammonium- oder Alkalisalze E)
0 bis 5 Gewichtsteile Tenside F)
0 bis 10 Gewichtsteile Alkohole G)

Besonders bevorzugt werden die Komponenten A) bis G) in folgenden Mengen eingesetzt:
50 bis 70 Gewichtsteile hydrophile Polyisocyanate A)
20 bis 40 Gewichtsteile heterocyclischer Oligomere B)
5 bis 20 Gewichtsteile Wasser C)
0 bis 0,5 Gewichtteile Katalysatoren D)
0,1 bis 1 Gewichtteile C₈- bis C₁₂-Monocarbonsäuren oder deren Ammonium- oder Alkalisalze oder C₁₂- bis C₄₄-Dicarbonsäuren oder deren Ammonium- oder Alkalisalze E)
0 Gewichtsteile Tenside F)
0 Gewichtsteile Alkohole G)

Die Herstellung der erfindungsgemäßen hydrophilen, aliphatischen Polyurethan-Schäume kann durch Mischen der Komponenten A), B) und C) gegebenenfalls B), D), E), F), G) in beliebiger Reihenfolge, Aufschäumen der Mischung und Aushärtung, bevorzugt durch chemische Vernetzung erfolgen. Bevorzugt werden die Komponenten A)und B) miteinander vorvermischt. Die gegebenenfalls einzusetzenden Carboxylate E) und gegebenenfalls die Tenside F) werden bevorzugt in Form ihrer wässrigen Lösungen dem Reaktionsgemisch zugesetzt.

Das Aufschäumen kann dabei grundsätzlich durch das bei der Reaktion der Isocyanatgruppen mit Wasser gebildete Kohlendioxid erfolgen, die Verwendung von weiteren Treibmitteln ist jedoch ebenfalls möglich. So können prinzipiell auch Treibmittel aus der Klasse der Kohlenwasserstoffe wie C₃-C₆-Alkane, z.B. Butane, *n*-Pentan, *iso*-Pentan, *cyclo*-Pentan, Hexane o.ä. oder halogenierte Kohlenwasserstoffe wie Dichlormethan, Dichlormonofluormethan, Chlordifluorethane, 1,1-Dichlor-2,2,2-Trifluorethan, 2,2-Dichlor-2-fluorethan, insbesondere chlorfreie Fluorkohlenwasserstoffe wie Difluormethan, Trifluormethan, Difluorethan, 1,1,1,2-Tetrafluorethan, Tetrafluorethan (R 134 oder R 134a), 1,1,1,3,3-Pentafluorpropan (R 245 fa), 1,1,1,3,3,3-Hexafluorpropan (R 256), 1,1,1,3,3-Pentafluorbutan (R 365 mfc), Heptafluorpropan oder auch Schwefelhexafluorid verwendet werden. Auch Gemische dieser Treibmittel sind verwendbar.

Die anschließende Aushärtung erfolgt typischerweise bei Raumtemperatur. Falls notwendig kann Restfeuchte (Wasser) aus dem Schaum mit übliche Trocknungsverfahren wie z.B. konvektive Lufttrocknung oder Mikrowellentrocknung entfernt werden.

Ein weiterer Gegenstand der vorliegenden Erfindung sind nach dem erfindungsgemäßen Verfahren erhältliche hydrophile, aliphatische Polyurethan-Schäume.

Die Polyurethan-Schäume weisen eine poröse, zumindest teilweise offenzellige Struktur mit miteinander kommunizierenden Zellen auf. Die Dichte der Polyurethan-Schäume liegt dabei typischerweise bei 0,01 bis 0,5 g/cm³ (Bestimmung nach DIN 53420).

Das Absorptionsvermögen gegenüber physiologischer Salzlösung beträgt bei den Polyurethan-Schäumen typischerweise 25 bis 150 g pro 100 cm² bei einem 5 mm dicken Schaum. Die Messung erfolgt dabei nach folgendem Verfahren: (Bestimmung nach DIN EN 13726-1, Teil 3.2)

Im Vergleich zu anderen hydrophilen Schäumen kann mit den erfindungsgemäßen Polyurethan-Schäumen auch ohne die Verwendung von superabsorbierenden Polymeren eine sehr hohe Absorption von physiologischer Salzlösung erreicht werden. Selbstverständlich ist die Einarbeitung von Superabsorbern aber auch bei den erfindungsgemäßen Polyurethan-Schäumen möglich.

Die Polyurethan-Schäume weisen eine gute mechanische Festigkeit und hohe Elastizität auf. Typischerweise sind die Werte für die Zugfestigkeit größer als 40 kPa, für die Bruchdehnung größer als 30 % und für die Rückprallelastizität größer als 60 % (Bestimmung nach DIN 53504, DIN 53455, DIN EN ISO 3386-1).

Nach der Herstellung können die Polyurethan-Schäume nach an sich bekannten Verfahren zu flächigen Materialien verarbeitet werden, welche dann beispielsweise als Bestandteil einer Wundauflage, eines kosmetischen Artikels oder eines Inkontinenzprodukts eingesetzt werden können. In der Regel werden dazu Blockschäume nach gängigen Methoden auf die gewünschte Dicke geschnitten wodurch flächige Materialien mit einer Dicke von typischerweise von 10 µm bis 5 cm, bevorzugt von 0,1 mm bis 1 cm, besonders bevorzugt von 0,1 mm bis 6 mm, ganz besonders bevorzugt von 0,2 mm bis 6 mm zu erhalten werden.

Mit Hilfe geeigneter Gießtechniken können die beschriebenen flächigen Materialien aber auch direkt durch Auftrag und Aufschäumen der erfindungsgemäßen Zusammensetzung auf ein Substrat, z.B. ein gegebenenfalls vorbehandeltes Papier oder Textil, erhalten werden.

In einer bevorzugten Variante wird dazu eine Mischung der Ausgangsmaterialien, wie in der noch unveröffentlichten europäischen Anmeldung mit der Nummer 09009202.4 beschrieben, mittels eines Rakels auf ein Substrat aufgebracht, woraufhin im Anschluss an das Rakeln das Aufschäumen erfolgt. Die Spalthöhe des Rakels liegt im Allgemeinen im Bereich von 0,2 bis 20 mm, bevorzugt von 0,5 bis 5 und ganz besonders bevorzugt von 0,8 bis 2 mm. Die Filmbreite des zu verwendenden Rakels kann dem jeweiligen Verwendungszweck angepasst werden. Beispiele sind Filmbreiten zwischen 10 und 5000 mm, bevorzugt zwischen 20 und 2000 mm.

Die Polyurethan-Schäume enthalten in der Regel einen nur geringen mit Wasser extrahierbaren Anteil von maximal 2 Gew.-%, bevorzugt von maximal 1 Gew.-%, d.h. sie enthalten nur sehr geringe Mengen an chemisch nicht gebundenen Bestandteilen.

Die Polyurethan-Schäume können überdies mit weiteren Materialien beispielsweise auf Basis von Hydrogelen, (semi-) permeablen Folien, Schaumfolien, Beschichtungen, Hydrokolloiden oder anderen Schäumen verklebt, laminiert oder beschichtet werden.

Gegenstand der vorliegenden Erfindung ist überdies die Verwendung der hydrophilen, aliphatischen Polyurethan-Schäume als Wundauflage, kosmetischer Artikel oder Inkontinenzprodukt.

Die erfindungsgemäßen Polyurethan-Schäume sind besonders zur Herstellung von Wundauflagen geeignet. Dabei können die Polyurethan-Schäume in direktem oder indirektem Kontakt mit der Wunde sein. Bevorzugt werden die Polyurethan-Schäume jedoch in direktem Kontakt mit der Wunde eingesetzt, um beispielsweise eine optimale Absorption von Wundflüssigkeit zu gewährleisten. Die Polyurethan-Schäume zeigen keine Zelltoxizität (Bestimmung nach ISO 10993-5 und ISO 10993-12).

Die Polyurethan-Schäume, die als Wundauflage eingesetzt werden, können zusätzlich noch in einem weiteren Verfahrensschritt sterilisiert werden. Zur Sterilisation kommen die dem Fachmann an sich bekannten Verfahren zum Einsatz, bei denen eine Sterilisation durch thermische Behandlung, chemische Stoffe wie Ethylenoxid oder Bestrahlung, beispielsweise durch Gammabestrahlung, erfolgt. Die Bestrahlung kann dabei gegebenenfalls unter Schutzgasatmosphäre erfolgen. Die erfindungsgemäßen Polyurethan-Schäume haben dabei den großen Vorteil, dass sie sich bei Bestrahlung, insbesondere bei Bestrahlung mit Gammastrahlen, nicht verfärben.

Ebenfalls möglich ist die Zugabe, Einarbeitung oder Beschichtung von bzw. mit antimikrobiellen oder biologischen Wirkstoffen, welche sich beispielsweise in Bezug auf die Wundheilung und die Vermeidung von Keimbelastungen positiv auswirken.

### Beispiele

Sofern nicht abweichend gekennzeichnet, beziehen sich alle Prozentangaben auf das Gewicht. Die Bestimmung der Festkörpergehalte erfolgte nach DIN-EN ISO 3251. Die Bestimmung der Viskositäten erfolgte bei 23 °C und wurde nach DIN 53019 durchgeführt. Die NCO-Gehalte wurden volumetrisch gemäß DIN-EN ISO 11909 bestimmt.

Die Messung der Härte (Shore 000) erfolgte bei 23°C mit dem Gerät Zwick 3137 mit dem Eindringkörper "Kugel Ø 1/2 inch" und einer Anpresskraft von 0,4 kg. Die Federkraft liegt bei 1,10853 N. Hersteller des Geräts: Zwick GmbH & Co. KG, Ulm, Deutschland.

Als Rakel wurde der Zehntner Universalapplikator ZUA 2000 mit einer Filmbreite von 200 mm und einer Spalthöhe einstellbar von 0 bis 3 mm eingesetzt (Fa. Zehntner GmbH, Sissach, Schweiz).

Die Absorption gegenüber physiologischer Salzlösung erfolgt nach DIN EN 13726-1, Teil 3.2)

### Verwendete Substanzen und Abkürzungen

| | |
|---|---|
| Desmodur® N 3300: | Aliphatisches Polyisocyanat (HDI-Isocyanurat), NCO-Gehalt 21,8 %, Bayer MaterialScience AG, Leverkusen, Deutschland |
| Desmodur® N 3400: | Aliphatisches Polyisocyanat (HDI-Uretdion), NCO-Gehalt 21,8 %, Bayer MaterialScience AG, Leverkusen, Deutschland |

### Beispiel X1: Herstellung eines hydrophilen Polyisocyanates (Baustein A)

Ein Gemisch aus 282,5 g Desmodur N 3300 und 843,8 g eines Mono-Hydroxy-funktionellen Polyethers auf Ethylenoxid-/Propylenoxidbasis (mit einem Ethylenoxid-Anteil von 80 mol bezogen auf die Gesamtmenge der enthaltenen Oxyalkylengruppen), zahlenmittleres Molekulargewicht 2250 g/mol (OH-Zahl 25 mg KOH/g) wurde in einer Glasapparatur so lang bei 80 °C gerührt, bis der tritrimetrisch ermittelte Gehalt an NCO-Gruppen konstant war. Man erhielt eine Flüssigkeit mit einem NCO-Gehalt von 4,04 % und einer Viskosität von 3330 mPas.

### Beispiel X2: Herstellung eines hydrophilen Polyisocyanates (Baustein A)

Ein Gemisch aus 214,5 g Desmodur N 3300 und 990 g eines Mono-Hydroxy-funktionellen Polyethers auf Ethylenoxid-/Propylenoxidbasis (mit einem Ethylenoxid-Anteil von 80 mol bezogen auf die Gesamtmenge der enthaltenen Oxyalkylengruppen), zahlenmittleres Molekulargewicht 2250 g/mol (OH-Zahl 25 mg KOH/g) wurde in einer Glasapparatur so lang bei 80 °C gerührt, bis der tritrimetrisch ermittelte Gehalt an NCO-Gruppen konstant war. Man erhielt eine Flüssigkeit mit einem NCO-Gehalt von 2,3 % und einer Viskosität von 3700 mPas.

### Herstellung von Schaumstoffen

Die beiden Isocyanat-Komponenten (Baustein A) und ggf. Baustein B) wurden 15 Sekunden mit einer Rührerdrehzahl von 1200 Upm homogenisiert, dann die weiteren Komponenten eingewogen, weitere 10 Sekunden verrührt und mit einem Rakel (Spalthöhe 1,5 mm) auf silikonisiertes Trennpapier aufgebracht. Als Oligomer (Baustein B)) wurde, falls verwendet, dabei jeweils Desmodur® N 3400 eingesetzt; als Carboxylat eine 5%ige Lösung von Natriumoleat in Wasser. Darüber hinaus zugesetztes Wasser wird extra angegeben.

| **Komponente [g]** | **1*** | **2** | **3** | **4** | **5** | **6** | **7** | **8*** |
|---|---|---|---|---|---|---|---|---|
| Hydrophiles PIC (Baustein A) aus Bsp.X1 | 75 g | 75g | 75g | 75 g | - | - | - | 0 |
| Hydrophiles PIC (Baustein A) aus Bsp.X2 | - | - | - | - | 75 | 75 | 75 | 0 |
| Oligomer (Baustein B) Desmodur N 3400 | 0 g | 8,33g | 25g | 50 g | 25 | 50 | 75 | 75 |
| Wasser (Baustein C) | 3,49 g | 3,49 g | 3,49g | 3,49g | 3,49 | 3,49 | 3,49 | 3,49 |
| Natrium-Oleat (Baustein E) als 5 Gew.-%ige Lösung in Wasser | 8,15 g | 8,15 g | 8,15 g | 8,15 g | 8,15 | 8,15 | 8,15 | 8,15 |
| Rohdichte [g/1000 cm³] | - | 349 | 113 | 66 | 294 | 146 | 88 | - |
| Härte (Shore 000) | - | 57 | 28 | 35 | 48 | 25 | 40 | - |
| Absorption according to DIN EN 13726-1 Teil 3.2 | - | 1810 | 1602 | 1157 | 968 | 1027 | 906 | - |

| | | | | | | | | |
|---|---|---|---|---|---|---|---|---|
| *Vergleichsbeispiele nicht erfindungsgemäß | | | | | | | | |

Die erfindungsgemäßen Beispiele sind flexible Schäume mit einer Härte (Shore 000) <80 eine niedrige Dichte < 400 g/l und hohe Absorption (>500%) gegenüber physiologischer Salzlösung.

Die erfindungsgemäßen Beispiele 3 und 4 aus dem Vorzugsbereich zeigen ein viskoelastischen Charakter bei niedriger Härte und sind dadurch besonders gut anschmiegbar auf der Haut.

Vergleichsbeispiel 1 zeigt, dass ohne nicht-hydrophiles Polyisocyanat (Baustein B)) ein Schaum erhalten wird, der keine feste Konsistenz aufweist (er zerbröselt).

Vergleichsbeispiel 8 zeigt dass ohne hydrophiles Polyisocyanat (Baustein A)) kein Schaum sondern ein Film erhalten wird.

Es wurden gefunden, dass hydrophile flexible Schäume durch Kombination von hydrophilen und nicht hydrophilen Polyisocyanaten und die Umsetzung dieser Mischung mit Wasser erhalten werden können (Beispiel 2, 3, 4, 5, 6 ,7). Ohne hydrophiles Polyisocyanate (Baustein A)) entsteht kein Schaum sondern ein transparenter Film (Beispiel 8), ohne nicht hydrophile Polyisocyanate (Baustein B)) (Beispiel 1) wird ein spröder Schaum ohne Zusammenhalt erhalten, der sofort zerbröselt.

## Patentansprüche

1. Verfahren zur Herstellung hydrophiler, aliphatischer Polyurethan-Schäume, bei dem Zusammensetzungen umfassend
A) hydrophile Polyisocyanate erhältlich durch Umsetzung von
A1) niedermolekularen, aliphatischen Diisocyanaten einer Molmasse von 140 bis 278 g/mol und / oder daraus herstellbaren Polyisocyanaten mit einer Isocyanatfunktionalität von 2 bis 6 mit
A2) monofunktionellen Polyalkylenoxiden einer OH-Zahl von 10 bis 250, und einem Ethylenoxidanteil von 50 bis 100 mol% bezogen auf die Gesamtmenge der enthaltenen Oxyalkylengruppen,
B) heterocyclische, 4-Ring- oder 6-Ring-Oligomere von niedermolekularen, aliphatischen Diisocyanaten mit einer Molmasse von 140 bis 278 g/mol,
C) Wasser,
D) gegebenenfalls Katalysatoren,
E) gegebenenfalls C₈- bis C₂₂-Monocarbonsäuren oder deren Ammonium- oder Alkalisalze oder C₁₂- bis C₄₄-Dicarbonsäuren oder deren Ammonium- oder Alkalisalze,
F) gegebenenfalls Tenside,
G) gegebenenfalls ein- oder mehrwertige Alkohole und
H) kein isocyanatfunktionelles Präpolymer mit einem Gewichtsanteil an niedermolekularen, aliphatischen Diisocyanaten mit einer Molmasse von 140 bis 278 g/mol von unter 1,0 Gew.-% bezogen auf das Präpolymer, erhältlich durch Umsetzung von
H1) niedermolekularen, aliphatischen Diisocyanaten einer Molmasse von 140 bis 278 g/mol mit
H2) di- bis hexafunktionellen Polyalkylenoxiden einer OH-Zahl von 22,5 bis 112 mg KOH/g, und einem Ethylenoxidanteil von 50 bis 100 mol% bezogen auf die Gesamtmenge der enthaltenen Oxyalkylengruppen,
bereitgestellt, aufgeschäumt und ausgehärtet werden.

2. Verfahren nach Anspruch 1, **dadurch gekennzeichnet, dass** hydrophile Polyisocyanate A) mit einem NCO-Gehalt von 0,3 bis 20 Gew.-%, bevorzugt von 2 bis 10 Gew.-% und besonders bevorzugt von 3 bis 6 Gew.-% eingesetzt werden.

3. Verfahren nach einem der Ansprüche 1 oder 2, **dadurch gekennzeichnet, dass** als niedermolekulare, aliphatische Diisocyanate A1) ausschließlich Hexamethylendiisocyanat, Isophorondiisocyanat oder deren Mischungen eingesetzt werden.

4. Verfahren nach einem der Ansprüche 1 bis 3, **dadurch gekennzeichnet, dass** mono funktionelle Polyalkylenoxide A2) mit einer OH-Zahl von 15 bis 150, bevorzugt von 28 bis 112 eingesetzt werden.

5. Verfahren nach einem der Ansprüche 1 bis 4, **dadurch gekennzeichnet, dass** monofunktionelle Polyalkylenoxide A2) mit einem Ethylenoxidanteil von 50 bis 100 mol%, bevorzugt von 60 bis 100 mol%, bezogen auf die Gesamtmenge der enthaltenen Oxyalkylengruppen, verwendet werden.

6. Verfahren nach einem der Ansprüche 1 bis 5, **dadurch gekennzeichnet, dass** monofunktionelle Polyalkylenoxide A2) mit einem zahlenmittleren Molekulargewicht von 220 bis 3700 g/mol, bevorzugt von 500 bis 2800 g/mol eingesetzt werden.

7. Verfahren nach einem der Ansprüche 1 bis 6, **dadurch gekennzeichnet, dass** als Komponente B) heterocyclische 4-Ring-Oligomere eingesetzt werden.

8. Verfahren nach einem der Ansprüche 1 bis 7, **dadurch gekennzeichnet, dass** als Katalysatoren de D) Metallsalze, Amine, Amidine und Guanidine eingesetzt werden.

9. Verfahren nach einem der Ansprüche 1 bis 8, **dadurch gekennzeichnet, dass** als Komponente E) Kalium- oder Natriumsalze von C₈- bis C₂₂-Monocarboxylaten oder C₁₂- bis C₄₄-Dicarboxylaten, bevorzugt Natriumsalze von C₈- bis C₂₂-Monocarboxylaten eingesetzt werden.

10. Verfahren nach einem der Ansprüche 1 bis 9, **dadurch gekennzeichnet, dass** als Tenside F) EO/PO-Blockcopolymere eingesetzt werden.

11. Verfahren nach einem der Ansprüche 1 bis 10, **dadurch gekennzeichnet, dass** als ein- oder mehrwertige Alkohole G) Ethanol, Propanol, Butanol, Decanol, Tridecanol, Hexadecanol, Ethylenglykol, Neopentylglykol, Butandiol, Hexandiol, Decandiol, Trimethylolpropan, Glycerin, Pentaerythrit, monofunktionelle Polyetheralkohole und Polyesteralkohole, Polyetherdiole und Polyesterdiole sowie deren Mischungen eingesetzt werden.

12. Verfahren nach einem der Ansprüche 1 bis 11, **dadurch gekennzeichnet, dass** die Komponenten A) bis H) in den folgenden Mengen eingesetzt werden:
45 bis 80 Gewichtsteile hydrophile Polyisocyanate A)
5 bis 50 Gewichtsteile heterocyclischer Oligomere B)
1 bis 50 Gewichtsteile Wasser C)
0 bis 1 Gewichtteile Katalysatoren D)
0 bis 5 Gewichtteile C₈- bis C₁₂-Monocarbonsäuren oder deren Ammonium- oder Alkalisalze oder C₁₂- bis C₄₄-Dicarbonsäuren oder deren Ammonium- oder Alkalisalze E)
0 bis 10 Gewichtsteile Tenside F)
0 bis 20 Gewichtsteile Alkohole G).

13. Polyurethanschaum erhältlich nach einem Verfahren gemäß einem der Ansprüche 1 bis 12.

14. Verwendung eines Polyurethanschaums nach Anspruch 13 als Wundauflage, kosmetischer Artikel oder Inkontinenzprodukt.

## Claims

1. Process for preparing hydrophilic aliphatic polyurethane foams wherein compositions comprising
A) hydrophilic polyisocyanates obtainable by reaction of
A1) low molecular weight aliphatic diisocyanates having a molar mass of 140 to 278 g/mol and/or polyisocyanates obtainable therefrom with an isocyanate functionality of 2 to 6, with
A2) monofunctional polyalkylene oxides having an OH number of 10 to 250, and an ethylene oxide content of 50 to 100 mol% based on the total amount of oxyalkylene groups present,
B) heterocyclic 4-ring or 6-ring oligomers of low molecular weight aliphatic diisocyanates having a molar mass of 140 to 278 g/mol,
C) water,
D) optionally catalysts,
E) optionally C₈ to C₂₂ monocarboxylic acids or their ammonium or alkali metal salts or C₁₂ to C₄₄ dicarboxylic acids or their ammonium or alkali metal salts,
F) optionally surfactants,
G) optionally mono- or polyhydric alcohols, and
H) no isocyanate-functional prepolymer having a weight fraction of low molecular weight aliphatic diisocyanates having a molar mass of 140 to 278 g/mol of below 1.0% by weight based on the prepolymer, obtainable by reaction of
H1) low molecular weight aliphatic diisocyanates having a molar mass of 140 to 278 g/mol with
H2) di- to hexafunctional polyalkylene oxides having an OH number of 22.5 to 112 mg KOH/g and an ethylene oxide content of 50 to 100 mol% based on the total amount of oxyalkylene groups present,
are provided, foamed and cured.

2. Process according to Claim 1, **characterized in that** hydrophilic polyisocyanates A) having an NCO content of 0.3% to 20% by weight, preferably of 2% to 10% by weight and more preferably of 3% to 6% by weight are used.

3. Process according to either Claim 1 or 2, **characterized in that** exclusively hexamethylene diisocyanate, isophorone diisocyanate or mixtures thereof are used as low molecular weight aliphatic diisocyanates A1).

4. Process according to any one of Claims 1 to 3, **characterized in that** monofunctional polyalkylene oxides A2) having an OH number of 15 to 150 and preferably of 28 to 112 are used.

5. Process according to any one of Claims 1 to 4, **characterized in that** monofunctional polyalkylene oxides A2) having an ethylene oxide content of 50 to 100 mol% and preferably of 60 to 100 mol%, based on the total amount of oxyalkylene groups present, are used.

6. Process according to any one of Claims 1 to 5, **characterized in that** monofunctional polyalkylene oxides A2) having a number average molecular weight of 220 to 3700 g/mol and preferably of 500 to 2800 g/mol are used.

7. Process according to any one of Claims 1 to 6, **characterized in that** heterocyclic 4-ring oligomers are used as component B).

8. Process according to any one of Claims 1 to 7, **characterized in that** metal salts, amines, amidines and guanidines are used as catalysts D).

9. Process according to any one of Claims 1 to 8, **characterized in that** potassium or sodium salts of C₈ to C₂₂ monocarboxylates or C₁₂ to C₄₄ dicarboxylates and preferably sodium salts of C₈ to C₂₂ monocarboxylates are used as component E).

10. Process according to any one of Claims 1 to 9, **characterized in that** EO-PO block copolymers are used as surfactants F).

11. Process according to any one of claims 1 to 10, **characterized in that** ethanol, propanol, butanol, decanol, tridecanol, hexadecanol, ethylene glycol, neopentylglycol, butanediol, hexanediol, decanediol, trimethylolpropane, glycerol, pentaerythritol, monofunctional polyether alcohols and polyester alcohols, polyether diols and polyester diols and also mixtures thereof are used as mono- or polyhydric alcohols G).

12. Process according to any one of Claims 1 to 11, **characterized in that** the components A) to H) are used in the following amounts:
45 to 80 parts by weight of hydrophilic polyisocyanates A)
5 to 50 parts by weight of heterocyclic oligomers B)
1 to 50 parts by weight of water C)
0 to 1 part by weight of catalysts D)
0 to 5 parts by weight of C₈ to C₁₂ monocarboxylic acids or their ammonium or alkali metal salts or C₁₂ to C₄₄ dicarboxylic acids or their ammonium or alkali metal salts E),
0 to 10 parts by weight of surfactants F)
0 to 20 parts by weight of alcohols G).

13. Polyurethane foam obtainable by following a process according to any one of Claims 1 to 12.

14. Use of a polyurethane foam according to Claim 13 as wound dressing, cosmetic article or incontinence product.

## Revendications

1. Procédé pour la préparation de mousses de polyuréthane aliphatique, hydrophile, dans lequel on prépare, fait mousser et durcit des compositions comprenant
A) des polyisocyanates hydrophiles pouvant être obtenus par transformation
A1) de diisocyanates aliphatiques de bas poids moléculaire, présentant une masse molaire de 140 à 278 g/mole et/ou de polyisocyanates pouvant être préparés à partir de ceux-ci présentant une fonctionnalité isocyanate de 2 à 6 avec
A2) des poly(oxydes d'alkylène) monofonctionnels présentant un indice d'OH de 10 à 250 et une proportion d'oxyde d'éthylène de 50 à 100% en mole par rapport à la quantité totale des groupes d'oxyalkylène contenus,
B) des oligomères de 4 ou 6 cycles, hétérocycliques, de diisocyanates aliphatiques de bas poids moléculaire présentant une masse molaire de 140 à 278 g/mole,
C) de l'eau,
D) le cas échéant des catalyseurs,
E) le cas échéant des acides C₈-C₂₂-monocarboxyliques ou leurs sels d'ammonium ou de métal alcalin ou des acides C₁₂-C₄₄-dicarboxyliques ou leurs sels d'ammonium ou de métal alcalin,
F) le cas échéant des agents tensioactifs,
G) le cas échéant des alcools monovalents ou polyvalents et
H) sans prépolymère à fonctionnalité isocyanate présentant une proportion pondérale de diisocyanates aliphatiques de bas poids moléculaire, présentant une masse molaire de 140 à 278 g/mole, inférieure à 1,0% en poids par rapport au prépolymère, pouvant être obtenu par transformation
H1) de diisocyanates aliphatiques de bas poids moléculaire, présentant une masse molaire de 140 à 278 g/mole avec
H2) des poly(oxydes d'alkylène) difonctionnels à hexafonctionnels présentant un indice d'OH de 22,5 à 112 mg de KOH/g et une proportion d'oxyde d'éthylène de 50 à 100% en mole par rapport à la quantité totale des groupes d'oxyalkylène contenus.

2. Procédé selon la revendication 1, **caractérisé en ce qu'**on utilise des polyisocyanates hydrophiles A) présentant une teneur en NCO de 0,3 à 20% en poids, de préférence de 2 à 10% en poids et de manière particulièrement préférée de 3 à 6% en poids.

3. Procédé selon l'une quelconque des revendications 1 ou 2, **caractérisé en ce qu'**on utilise, comme diisocyanates aliphatiques de bas poids moléculaire A1), exclusivement du diisocyanate d'hexaméthylène, du diisocyanate d'isophorone ou leurs mélanges.

4. Procédé selon l'une quelconque des revendications 1 à 3, **caractérisé en ce qu'**on utilise des poly(oxydes d'alkylène) monofonctionnels A2) présentant un indice d'OH de 15 à 150, de préférence de 28 à 112.

5. Procédé selon l'une quelconque des revendications 1 à 4, **caractérisé en ce qu'**on utilise des poly(oxydes d'alkylène) monofonctionnels A2) présentant une proportion d'oxyde d'éthylène de 50 à 100% en mole, de préférence de 60 à 100% en mole, par rapport à la quantité totale des groupes d'oxyalkylène contenus.

6. Procédé selon l'une quelconque des revendications 1 à 5, **caractérisé en ce qu'**on utilise des poly(oxydes d'alkylène) monofonctionnels A2) présentant un poids moléculaire moyen en nombre de 220 à 3700 g/mole, de préférence de 500 à 2800 g/mole.

7. Procédé selon l'une quelconque des revendications 1 à 6, **caractérisé en ce qu'**on utilise, comme composant B), des oligomères à 4 cycles, hétérocycliques.

8. Procédé selon l'une quelconque des revendications 1 à 7, **caractérisé en ce qu'**on utilise, comme catalyseurs du composant D), des sels métalliques, des amines, des amidines et des guanidines.

9. Procédé selon l'une quelconque des revendications 1 à 8, **caractérisé en ce qu'**on utilise, comme composant E), des sels de potassium ou de sodium de monocarboxylates en C₈-C₂₂ ou de dicarboxylates en C₁₂-C₄₄, de préférence des sels de sodium de monocarboxylates en C₈-C₂₂.

10. Procédé selon l'une quelconque des revendications 1 à 9, **caractérisé en ce qu'**on utilise, comme tensioactifs F), des copolymères séquencés d'OE/OP.

11. Procédé selon l'une quelconque des revendications 1 à 10, **caractérisé en ce qu'**on utilise, comme alcools monovalents ou polyvalents G), l'éthanol, le propanol, le butanol, le décanol, le tridécanol, l'hexadécanol, l'éthylèneglycol, le néopentylglycol, le butanediol, l'hexanediol, le décanediol, le triméthylolpropane, le glycérol, le pentaérythritol, les polyétheralcools et les polyesteralcools monofonctionnels, les polyétherdiols et les polyesterdiols ainsi que leurs mélanges.

12. Procédé selon l'une quelconque des revendications 1 à 11, **caractérisé en ce que** les composants A) à H) sont utilisés dans les quantités suivantes :
45 à 80 parties en poids de polyisocyanates hydrophiles A)
5 à 50 parties en poids d'oligomères hétérocycliques B) 1 à 50 parties en poids d'eau C)
0 à 1 partie en poids de catalyseurs D)
0 à 5 parties en poids d'acides monocarboxyliques en C₈-C₁₂ ou de leurs sels d'ammonium ou de métal alcalin ou d'acides dicarboxyliques en C₁₂-C₄₄ ou de leurs sels d'ammonium ou de métal alcalin E)
0 à 10 parties en poids d'agents tensioactifs F)
0 à 20 parties en poids d'alcools G).

13. Mousse de polyuréthane, pouvant être obtenue selon un procédé selon l'une quelconque des revendications 1 à 12.

14. Utilisation d'une mousse de polyuréthane selon la revendication 13 comme pansement, article cosmétique ou produit d'incontinence.
